# EUROPEAN PATENT APPLICATION

(11) **EP 4 557 486 A1**
(43) Date of publication of application: **21.05.2025**
(21) Application number: 23843231.4
(22) Date of filing: 06.07.2023
(51) Int. Cl.: H01M 50/358, H01M 50/333, H01M 50/342, H01M 50/249

(54) **EXPLOSION-PROOF BATTERY MODULE STRUCTURE**

(30) Priority: 19.07.2022 KR 20220088814
(71) Applicant: LG Energy Solution, Ltd., Seoul 07335 (KR)
(72) Inventor: LEE, Junghoon, Daejeon 34122 (KR); JANG, Sunghwan, Daejeon 34122 (KR)
(74) Representative: Plasseraud IP
(86) International application number: PCT/KR2023/009616
(87) International publication number: WO 2024/019380

(57) **Abstract**

The present invention provides a battery module 1 including an expansion member 31 and a spring member 32 for preventing or delaying emission of heat energy and flame and explosion and preventing serial ignition between other battery modules. The expansion member 31 may include a reverse disk 31R, and the reverse disk 31R is inverted under an inner pressure higher than a predetermined yield pressure which is lower than an explosion pressure defined as a minimum value of the inner pressure whereat the battery module 1 explodes, thereby preventing or delaying the increase in the inner pressure and explosion.

## Description

### [TECHNICAL FIELD]

This application claims the benefit of priority based on Korean Patent Application No. 10-2022-0088814, dated July 19, 2022, and entire contents disclosed in the documents of the patent applications are included as a part of this specification.

The present invention relates to a battery module with reduced risk of explosion through an expanded inner space structure of the battery module and venting structure.

### [BACKGROUND ART]

Secondary batteries, which are easy to apply depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium-to-large battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium-to-large battery modules.

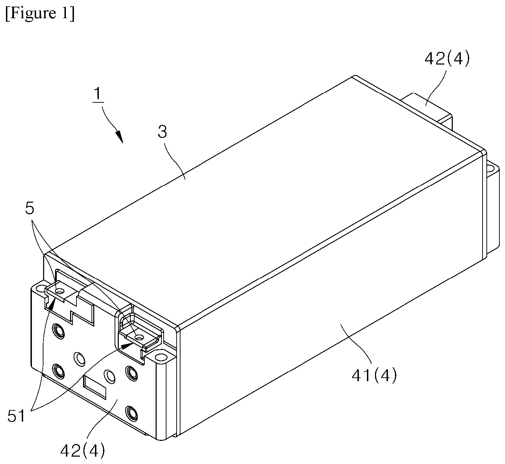

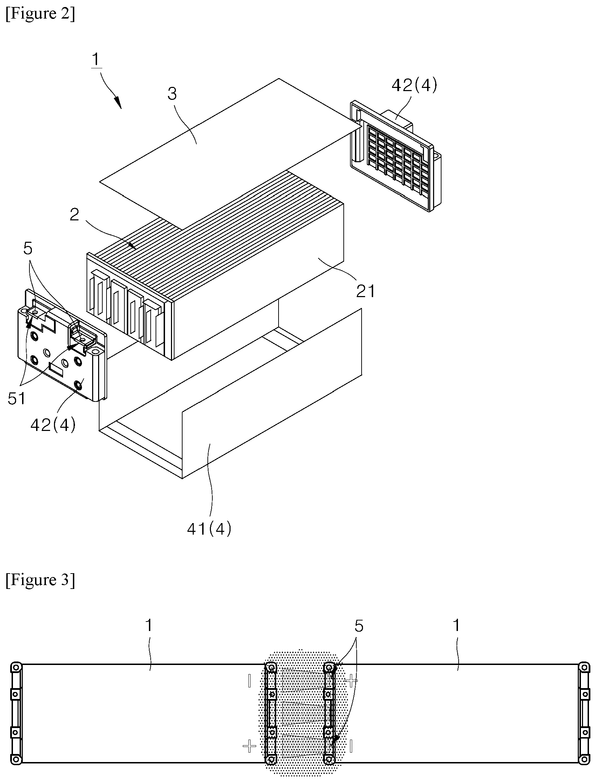

FIGS. 1 and 2 are a perspective view and an exploded perspective view illustrating a general battery module, respectively. Referring to FIGS. 1 and 2, the battery module 1 generally may include: a battery cell laminate 2; a U frame 41 accommodating the battery cell laminate 2; a pair of end plates 42 covering a front end and a rear end of the U frame 41, respectively; and a top plate 3 covering an upper end of the U frame 41.

The battery cell laminate 2 may be formed by stacking a plurality of pouch-type battery cells 21, and each of the battery cells 21 may include a pair of electrode leads. The electrode leads with the same polarity may be connected to each other through a busbar frame or the electrode leads with different polarities may be connected to each other through the busbar frame, and the busbar may be electrically connected to terminals 5 exposed to the outside of the battery module 1 through a terminal exposing portion 51 provided at the end plate 42. As a result, the battery cell laminate 2 may be connected to other external battery modules.

Meanwhile, there is a risk that the battery cell 21 may overheat and ignite due to a short circuit. When the battery cell 21 ignites, heat, flame and venting gas generated by vaporization of the electrolyte charged in the battery cell 21 may be discharged from the battery cell 21. The heat, flame and venting gas may increase the inner pressure of the battery module 1, and accordingly, there is a risk of explosion of the battery module 1. Such explosion of battery module, especially the battery of an electric vehicle located close to the passenger, has the potential to lead to a fatal accident.

Meanwhile, as a way to prevent the problem of explosion of the battery module as described above, a method of reducing the inner pressure of the battery module through a venting structure that intentionally discharges heat, flame and venting gas caused by ignition has been widely used. However, due to this venting structure, there was a problem that flame and heat energy could be transferred between adjacent battery modules within the battery pack, resulting in serial ignition.

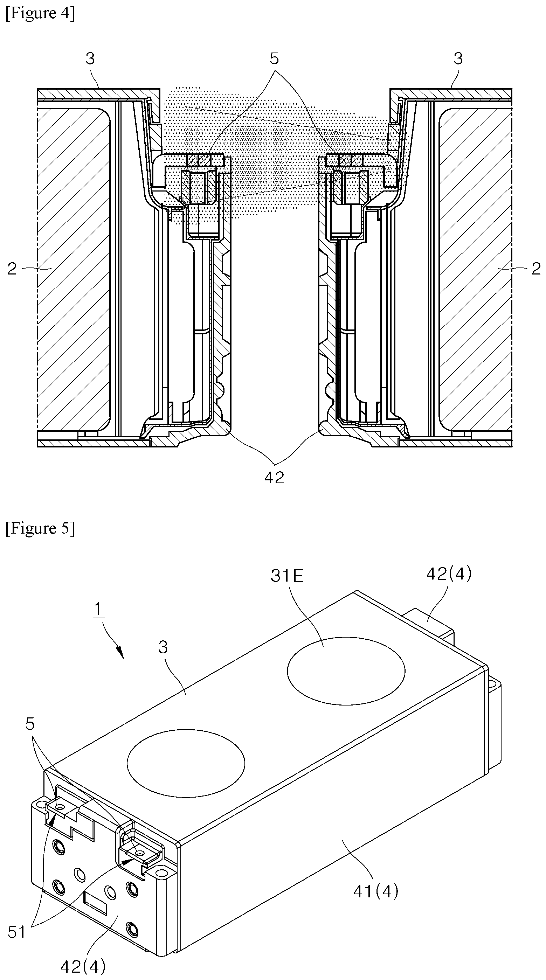

FIGS. 4 and 5 are schematic diagrams illustrating the transfer of heat energy and flame between battery modules. Referring to FIGS. 4 and 5, the heat energy and flame generated due to ignition of the battery cell laminate 2 may be mainly discharged through the terminal exposing portion 51 provided at the end plate 42, and the coupling area among the end plate 42, the top plate. 3 and the U frame 41. In a battery pack, battery modules are often arranged adjacent to each other in the lengthwise direction or widthwise direction such that there is a high risk of serial ignition when venting is achieved horizontally as described above.

In addition, even when the inner pressure of the battery module 1 is sufficiently reduced due to venting, it is very likely that heat energy and flames generated from other battery modules are transmitted to the battery module 1 with the battery module 1 remaining open for venting.

### [DISCLOSURE]

### [TECHNICAL PROBLEM]

In order to solve above-described problem of prior art, it is an object of the present invention to provide a structure for a battery module wherein an increase in inner pressure may be prevented or delayed thereby delaying explosion and emission of flame upon ignition.

It is another object of the present invention to provide a structure of a battery module wherein the venting is guided in vertical direction in case of ignition of fire.

It is yet another object of the present invention to provide a structure of a battery module that may be resealed after venting occurs.

Aspects according to the present disclosure are not limited to the above ones, and other aspects and advantages that are not mentioned above may be clearly understood from the following description and may be more clearly understood from the embodiments set forth herein. Additionally, the aspects and advantages in the present disclosure may be realized via means and combinations thereof that are described in the appended claims.

### [TECHNICAL SOLUTION]

In order to solve the above-described problem, the present invention provides a battery module including a battery cell laminate, the battery module comprising: a frame with an open upper portion; a top plate coupled to the frame and covering the open upper portion; a spring member applying pressure in downward direction and fixing the top plate to be in contact with an upper end of the sidewall of the frame; and an expansion member provided at a portion of the top plate.

An explosion pressure defined as a minimum value of the inner pressure whereat the battery module explodes may be provided for the battery module.

The battery module according to the present invention is provided with an expansion member and a spring member such that an increase in the inner pressure of the battery module may be delayed in case of ignition of the battery cell laminate in addition to uncoupling the top plate from the frame to open the frame before the inner pressure of the module reaches the explosion pressure, thereby inducing venting.

The spring member may apply pressure to the top plate in downward direction to fix the top plate such that the top plate is in contact with an upper end of the sidewall of the frame to cover the open upper portion of the frame.

One or a plurality of spring members may be installed.

The spring member may be a coil spring made of metal, but is not limited thereto.

The spring member may be installed embedded in the upper end of the sidewall of the frame. The embedded installation may be accomplished through insert injection, or may be accomplished by providing and assembling a separate member for fixation.

Here, the upper end of the spring member may be fixed to the top plate.

By fixing two ends of the spring member to the upper end of the sidewall of the frame and the top plate, respectively, as described above, the spring member is tensioned when the top plate moves away from the upper end of the sidewall of the frame. Accordingly, the spring member may provide a restoring force to restore the top plate toward the upper end of the sidewall of the frame.

Instead of the spring member, the lower end of the spring shaft may be installed embedded in the upper end of the sidewall of the frame. In this case, the embedded installation may be accomplished through insert injection, or may be accomplished by providing and assembling a separate member for fixation.

Here, the spring shaft may be provided to penetrate the top plate vertically, and a fixing end may be provided at the upper end of the spring shaft located above the top plate.

Here, the spring member may be installed to be penetrated by the spring shaft between the top plate and the fixing end. That is, the spring member may be installed in a manner that the upper end thereof is in contact with the fixing end, the lower end thereof is in contact with the top plate to be vertically interposed between the fixing end and the top plate.

As described above, by providing the spring member between the fixing end at the upper end of the spring shaft and the top plate penetrated by the spring shaft connected to the upper end of the sidewall of the frame and penetrating the top plate, the spring member is compressed when the top plate moves away from the upper end of the sidewall of the frame to have a restoring force that pushes the top plate toward the upper end of the sidewall of the frame.

A maximum allowable pressure limit for the battery module may be defined as a maximum value of the inner pressure of the battery module whereat a bond between the top plate and the frame is maintained.

The maximum allowable pressure limit may be lower than the explosion pressure. Thus, the inner pressure of the battery module may reach the maximum allowable pressure limit before reaching the explosion pressure such that the top plate is decoupled from the frame and an opening is created in an upward direction for the battery module. As a result, flame, heat energy and venting gas generated from the battery cell laminate are vented in the upward direction, thereby reducing the inner pressure.

The spring member may include a pre-stressed spring which is pre-tensioned or pre-compressed to have a predetermined restoring force even with the top plate and the frame in complete contact. Accordingly, the maximum allowable pressure limit may be defined as a minimum value of the inner pressure whereat additional tension or compression occurs in the spring member.

The top plate and the frame may be connected and coupled to each other by additional fixing member other than the spring member.

The fixing member may be designed to be destroyed against a load exceeding a predetermined level. Accordingly, the maximum allowable pressure limit may be defined as a minimum value of the inner pressure of the battery module whereat the fixing member is destroyed.

When venting occurs as described above caused by the inner pressure of the battery module exceeding the maximum allowable pressure limit, the inner pressure of the battery module further decreases due to venting. Accordingly, the battery module may be sealed as the top plate is re-coupled to the frame by the restoring force provided by the spring member.

One edge of the top plate and one edge of the upper end of the sidewall of the frame may be connected to each other by a hinge. Accordingly, the battery module may be provided with an opening between the other edge of the top plate and the other edge of the upper end of the sidewall of the frame.

The expansion member may be provided as part of the top plate.

The expansion member may be coupled to the top plate to cover and seal the hole provided at the top plate. Alternatively, the expansion member may be formed integrally with the top plate.

The expansion member may be made of a heat-resistant and/or flame-resistant material. For example, the expansion member may be made of metal.

The expansion member may expand outward to expand the inner space of the battery module as the inner pressure of the battery module increases.

One or a plurality of expansion members may be provided.

The expansion member may include an elastic diaphragm that expands outward as the inner pressure of the battery module increases. Alternatively, the expansion member may include a reverse disk that yields and protrudes outward when the inner pressure of the battery module is greater than a yield pressure.

As the expansion member expands, the inner space of the battery module expands, thereby delaying an increase in the inner pressure of the battery module caused by venting gas and heat energy generated when the battery cell laminate ignites.

The above-described solution may also be applied to a battery pack including a battery module according to the present invention and a vehicle including the battery pack. Since such manufacturing methods for battery packs and vehicles are well known, description will not be given herein.

### [ADVANTAGEOUS EFFECTS]

The present invention may provide a structure of a battery module wherein the inner space may be expanded in case of ignition by providing an expansion member at the top plate, thereby preventing or delaying an increase in the inner pressure to prevent or delay the emission of flame and explosion while maintaining a sealed state.

The present invention may provide a structure of a battery module wherein venting in case ignition is directed in upward direction by adopting a structure in which the top plate is opened when the inner pressure exceeds the maximum allowable pressure limit.

As another effect of the present invention, a structure of a battery module wherein the frame and the top plate coupled by the spring member such that the battery module is re-sealed after venting occurs.

In addition to the above effects, various other effects may be produced according to the preset disclosure, and description of the effects is provided with reference to each embodiment or description of effects predicted by one having ordinary skill in the art readily and the like are omitted.

### [DESCRIPTION OF DRAWINGS]

FIG. 1 is a perspective view illustrating a generic battery module.
FIG. 2 is an exploded perspective view illustrating a generic battery module.
FIG. 3 is a schematic diagram illustrating the transfer of heat energy and flame between battery modules.
FIG. 4 is a schematic diagram illustrating the transfer of heat energy and flame between battery modules.
FIG. 5 is a perspective view illustrating a battery module provided with an elastic diaphragm at a top plate according to a first embodiment of the present invention.
FIG. 6 is a side cross-sectional view illustrating the battery module provided with the elastic diaphragm at the top plate before ignition according to the first embodiment of the present invention.
FIG. 7 is a side cross-sectional view illustrating the battery module provided with the elastic diaphragm at the top plate after ignition according to the first embodiment of the present invention.
FIG. 8 is a perspective view illustrating a battery module provided with a reverse plate at a top plate according to a second embodiment of the present invention.
FIG. 9 is a side cross-sectional view illustrating the battery module provided with the reverse plate at the top plate before ignition according to the second embodiment of the present invention.
FIG. 10 is a side cross-sectional view illustrating the battery module provided with the reverse plate at the top plate after ignition according to the second embodiment of the present invention.
FIG. 11 is a perspective view illustrating a battery module provided with a reverse plate and a spring member according to a third embodiment of the present invention.
FIG. 12 is a side cross-sectional view illustrating the battery module provided with the reverse plate and the spring member before ignition according to the third embodiment of the present invention.
FIG. 13 is a side cross-sectional view illustrating the battery module provided with the reverse plate and the spring member after ignition according to third embodiment of the present invention.
FIG. 14 is a perspective view illustrating a battery module provided with a reverse plate, a spring member and a spring shaft according to a fourth embodiment of the present invention.
FIG. 15 is a side cross-sectional view illustrating the battery module provided with the reverse plate, the spring member and the spring shaft before ignition according to the fourth embodiment of the present invention.
FIG. 16 is a side cross-sectional view illustrating the battery module provided with the reverse plate, the spring member and the spring shaft after ignition according to the fourth embodiment of the present invention.
FIG. 17 is a perspective view illustrating a battery module provided with a reverse plate, a spring member and a hinge according to a fifth embodiment of the present invention.
FIG. 18 is a perspective view illustrating a battery pack including a battery module according to the present invention.
FIG. 19 is a perspective view illustrating a vehicle including the battery pack of FIG. 18.

### [DESCRIPTION OF REFERENCE NUMERALS]

1: battery module
2: battery cell laminate
21: battery cell
3: top plate
31: expansion member
31E: elastic diaphragm
31R: reverse disk
32: spring member
32A: spring shaft
322: spring fixing end
4: frame
41: U frame
411: spring installation portion
412: hinge
42: end plate
5: terminal
51: terminal exposing portion
P: battery pack
V: vehicle

### [SPECIFIC DETAILS FOR CARRYING OUT THE INVENTION]

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component may be a second component, unless stated to the contrary.

Throughout the disclosure, each component may be provided as a single one or a plurality of ones, unless explicitly stated to the contrary.

When any one component is described as being "in the upper portion (or lower portion)" or "on (or under)" another component, any one component may be directly on (or under) another component, but an additional component may be interposed between any one component and another component on (or under) any one component.

When any one component is described as being "connected", "coupled", or "connected" to another component, any one component may be directly connected or coupled to another component, but an additional component may be "interposed" between the two components or the two components may be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but may be interpreted as excluding some of the stated components or steps or may be interpreted as including additional components or steps.

Throughout the disclosure, the phrase "A and/or B" as used herein can denote A, B or A and B, and the phrase "C to D" can denote C or greater and D or less, unless stated to the contrary.

The present invention provides a structure of a battery module wherein:
the increase in the inner pressure is prevented or delayed to prevent or delay the emission of heat energy and flame by including an expansion member expanding within a predetermined maximum allowable pressure limit to increase the inner space as the inner pressure increases;
the top plate is opened to induce venting in the upward direction when the inner pressure exceeds the maximum allowable pressure limit, thereby preventing heat energy and flame from being transferred to other battery modules; and
the battery modules is re-sealed by the spring member after venting is complete, thereby preventing the risk of heat energy and flame being transferred from other battery modules.

Hereinafter, explosion pressure of a battery module is defined as the minimum value of the inner pressure whereat explosion of the battery module occurs.

Hereinafter, preferred embodiments of the present invention will be described with reference to the accompanying drawings.

### [FIRST EMBODIMENT]

FIG. 5 is a perspective view illustrating a battery module provided with an elastic diaphragm at a top plate according to a first embodiment of the present invention. Referring to FIG. 5, a battery module 1 according to the present invention may include a battery cell laminate; a frame 4 with an open upper portion and accommodating the battery cell laminate therein; and a top plate 3 covering the open upper portion of the frame 4; a spring member (not shown) applying pressure in downward direction and fixing the top plate 3 such that the top plate 3 is in contact with the upper end of the sidewall of the frame 4; and an expansion member 31 provided at a portion of the top plate 3.

The frame 4 may have an open upper portion, and in particular, may have a box shape with an open upper portion.

The frame 4 may include a U-shaped U frame 41 with open front portion, open rear portion and open upper portion, and a pair of end plates 42 coupled to the U frame 41 and covering the open front portion and the open rear portion of the U frame 41, respectively.

The U frame 41 may be made of various materials and manufactured by various methods. For example, the U frame may be made of a single metal plate that is plastically deformed into a U shape by a press.

The end plate 42 and the U frame 41 may be coupled to each other in various ways. For example, the end plate 42 and the U frame 41 may be coupled to each other by welding or friction fitting.

The top plate 3 may cover the open upper portion of the frame 4.

The battery module 1, in a fully assembled state, is sealed by the frame 4 and the top plate coupled to each other, blocking the entry and exit of gas or flame between the inside and the outside, unless in special cases.

The expansion member 31 may be provided as a part of the top plate 3.

The expansion member 31 may be coupled to the top plate 3 to cover and seal the hole provided at the top plate 3. Alternatively, the expansion member 31 may be formed integrally with the top plate 3.

The expansion member 31 may be made of heat-resistant and/or fire-resistant material. For example, the expansion member 31 may be made of metal.

The expansion member 31 may expand outward to expand the inner space of the battery module 1 as the inner pressure of the battery module increases.

One or a plurality of expansion members 31 may be provided.

The expansion member 31 may include an elastic diaphragm that expands outward as the inner pressure of the battery module 1 increases.

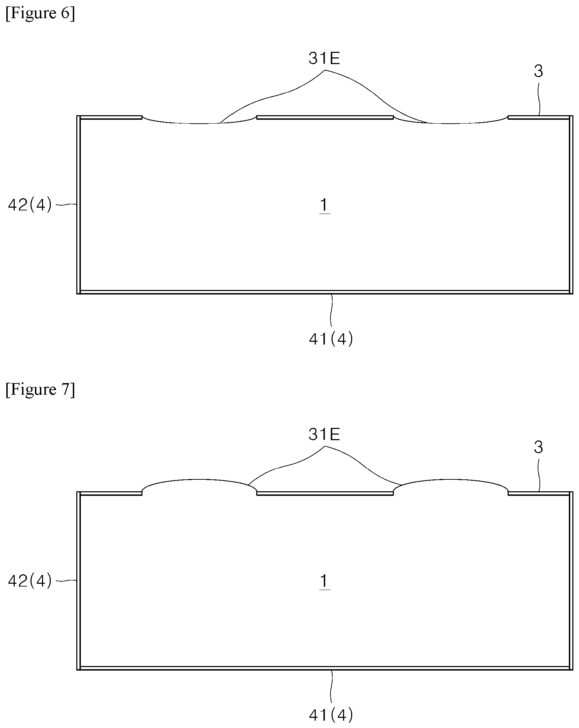

FIGS. 6 and 7 are a side cross-sectional view and a side cross-sectional view illustrating the battery module provided with the elastic diaphragm at the top plate before and after ignition, respectively, according to the first embodiment of the present invention. Referring to FIGS. 6 and 7, in the battery module 1 provided with an elastic diaphragm 31E, a large amount of venting gas is generated and the inner temperature rises rapidly when the battery cell laminate is ignited, thereby causing the inner pressure of the battery module 1 to increase. Here, as the inner pressure increases, the elastic diaphragm 31E may expand to increase the inner space of the battery module 1. Since the pressure of the same amount of gas is inversely proportional to the volume thereof, the increase in inner pressure of the battery module 1 due to the venting gas and heat energy may be prevented or delayed as the inner space of the battery module 1 expands as described above.

By preventing the increase in the inner pressure of the battery module 1, the inner pressure of the battery module 1 may not reach the explosion pressure thereof. Alternatively, by delaying the increase in the inner pressure of the battery module 1, the time taken until the inner pressure of the battery module 1 reaches the explosion pressure may be delayed.

Meanwhile, when the elastic diaphragm 31E is provided at the top plate 3, the direction of expansion is also directed upward, and even when the elastic diaphragm 31E ruptures, flame, heat energy and venting gas caused by the ignition may be discharged in the upward direction.

When the internal temperature and inner pressure of the battery module 1 decrease as the fire extinguishes, the elastic diaphragm 31E may contract and return to its original state.

### [SECOND EMBODIMENT]

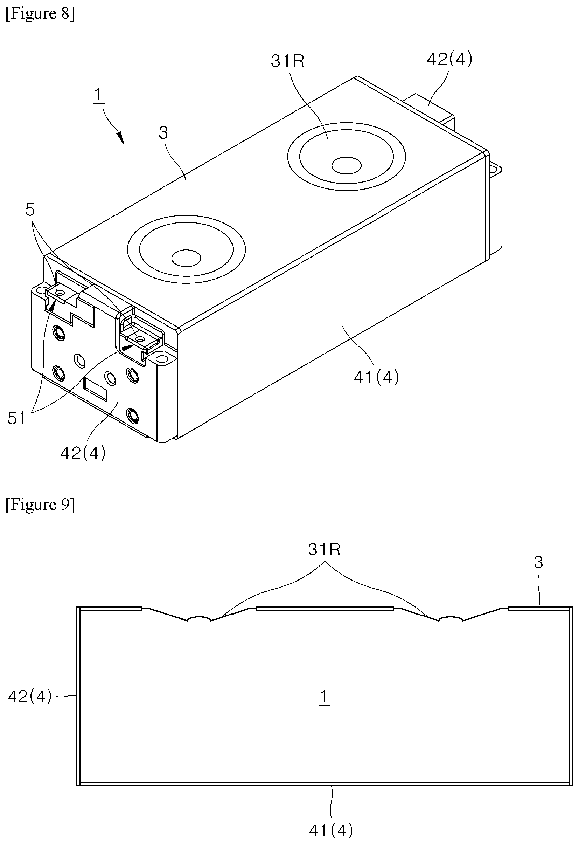

FIG. 8 is a perspective view illustrating a battery module provided with a reverse plate at a top plate according to a second embodiment of the present invention. Referring to FIG. 8, the expansion member 31 may include a reverse disk 31R, which is normally recessed toward the inside of the battery module 1, yielding and inverting to protrude outward when the inner pressure of the battery module 1 is higher than the yield pressure.

The reverse disk 31R may include an elastic cup-shaped member. For example, the reverse disk 31R may include a cup-shaped metal member with a peripheral portion, a recessed portion recessed in a first direction with respect to the peripheral portion and a protruding portion protruding in a second direction opposite to the first direction with respect to the peripheral portion.

When a pressure greater than the yield pressure is applied to the protruding portion in the first direction, the reverse disk 31R is inverted such that the recessed portion becomes a protruding portion protruding in the second direction with respect to the peripheral portion and the protruding portion becomes a recessed portion protruding in the first direction with respect to the peripheral portion. However, some portion of the reverse disk 31R may not be inverted.

The reverse disk 31R may include a reverse-acting bursting disk which inverts when the inner pressure is higher than the designed inversion pressure, and ruptures when the inner pressure is higher than the designed burst pressure. Preferably, the reverse disk 31R may include a reverse-acting bursting disk with a designed inversion pressure smaller than the explosion pressure of the battery module 1 and a designed burst pressure larger than the explosion pressure. Here, the designed inversion pressure is equal to the yield pressure.

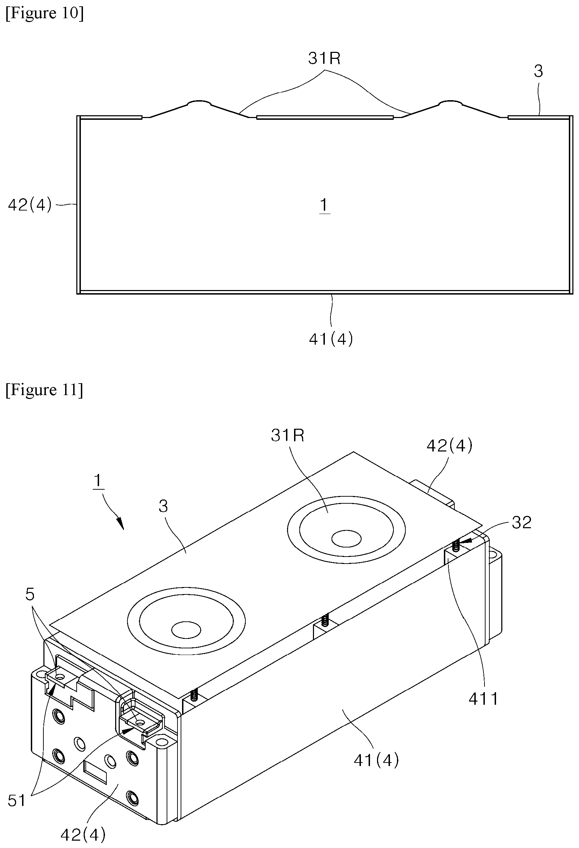

FIGS. 9 and 10 are side cross-sectional views illustrating the battery module provided with the reverse plate at the top plate before and after ignition, respectively, according to the second embodiment of the present invention. Referring to FIGS. 9 and 10, in the battery module 1 provided with the reverse disk 31R, a large amount of venting gas is generated and the inner temperature rises rapidly when the battery cell laminate is ignited, thereby causing the inner pressure of the battery module 1 to increase. Here, when the inner pressure of the battery module 1 is higher than the yield pressure of the reverse disk 31R, the reverse disk 31R may expand by inverting and protruding outward to increase the inner space of the battery module 1. Since the pressure of the same amount of gas is inversely proportional to the volume thereof, the increase in inner pressure of the battery module 1 due to the venting gas and heat energy may be prevented or delayed as the inner space of the battery module 1 expands as described above.

By preventing an increase in the inner pressure of the battery module 1, the inner pressure of the battery module 1 may not reach the explosion pressure thereof. Alternatively, by delaying the increase in the inner pressure of the battery module 1, the time period for the inner pressure of the battery module 1 to reach the explosion pressure may be prolonged.

Meanwhile, when the reverse disk 31R is provided at the top plate 3, the direction of expansion is also in the upward direction, and even when the reverse disk 31R ruptures, flame, heat energy and venting gas caused by due the ignition may be discharged in the upward direction.

### [THIRD EMBODIMENT]

FIG. 11 is a perspective view illustrating a battery module provided with a reverse plate and a spring member according to a third embodiment of the present invention. Referring to FIG. 11, the battery module 1 according to the third embodiment of the present invention may include a spring member 32 that applies pressure to the top plate 3 in downward direction to fix the top plate 3 such that the top plate 3 is in contact with the upper end of the sidewall of the frame 4 to cover the open upper portion of the frame 4.

One or a plurality of spring members 32 may be installed.

The spring member 32 may be a coil spring made of metal, but is not limited thereto.

The spring member 32 may be installed embedded in the upper end of the sidewall of the frame. The embedded installation may be accomplished through insert injection, or may be accomplished by providing and assembling a separate member for fixation. Here, the upper end of the spring member 32 may be fixed to the top plate 3.

When the thickness of the sidewall of the frame 4 is sufficient, the spring member 32 may be installed directly embedded in the upper end of the sidewall, and when the thickness of the sidewall of the frame 4 is insufficient, the spring member 32 may be installed embedded in a spring installation portion 411 protruding inward from the upper end of the sidewall.

As described above, by fixing two ends of the spring member 32 to the upper end of the sidewall of the frame 4 and the top plate 3, respectively, as described above, the spring member 32 is tensioned when the top plate 3 moves away from the upper end of the sidewall of the frame. Accordingly, the spring member 32 may provide a restoring force to restore the top plate 3 toward the upper end of the sidewall of the frame.

Compressible packing may be additionally installed at the upper end of the sidewall of the frame 4 such that the sealing between the space between the top plate 3 and the frame 4 is facilitated by the pressure applied by the spring member 32.

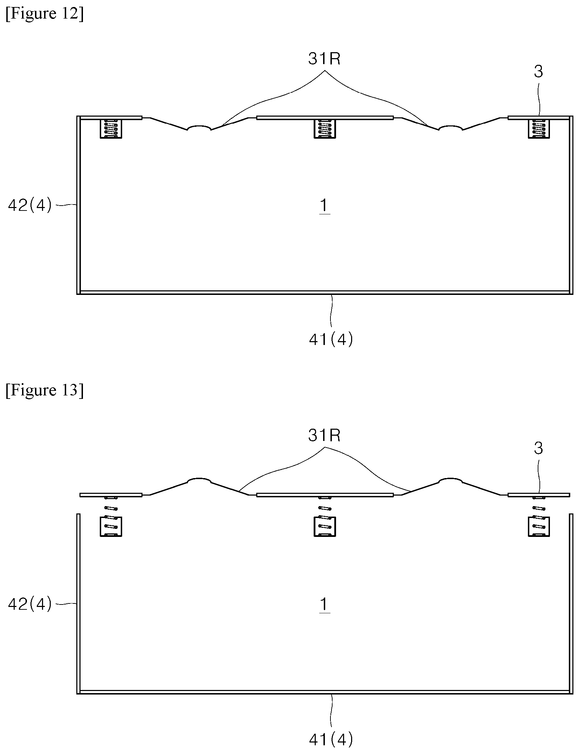

FIGS. 12 and 13 are side cross-sectional views illustrating the battery module provided with the reverse plate and the spring member before and after ignition, respectively, according to the third embodiment of the present invention. Referring to FIGS. 12 and 13, a maximum allowable pressure limit for the battery module 1 may be defined as a maximum value of the inner pressure of the battery module 1 whereat a bond between the top plate 3 and the frame 4 is maintained.

The spring member 32 may include a pre-stressed spring which is pre-tensioned or pre-compressed to have a predetermined restoring force even with the top plate 3 and the frame 4 in complete contact. Accordingly, the maximum allowable pressure limit may be defined as a minimum value of the inner pressure whereat additional tension or compression occurs in the spring member 32.

Alternatively, the top plate 3 and the frame 4 may be connected and coupled to each other by additional fixing member other than the spring member 32. Here, the fixing member may be designed to be destroyed against a load exceeding a predetermined level. Accordingly, the maximum allowable pressure limit may be defined as a minimum value of the inner pressure of the battery module 1 whereat the fixing member is destroyed.

The maximum allowable pressure limit may be set to be lower than the explosion pressure. Thus, the inner pressure of the battery module 1 may reach the maximum allowable pressure limit before reaching the explosion pressure in case of ignition of the battery module 1 such that the top plate 3 is decoupled from the frame 4 and an opening is created in an upward direction for the battery module 1. As a result, flame, heat energy and venting gas generated from the battery cell laminate are vented in the upward direction, thereby reducing the inner pressure of the battery module 1.

In the battery module 1 according to this embodiment, when the inner pressure of the battery module 1 increases due to heat energy, flame and venting gas generated by ignition of the battery cell laminate,: the reverse disk 31R is inverted under the inner pressure higher than the yield pressure of the reverse disk 31R to expand the inner space of the battery module 1, thereby decreasing the inner pressure or delaying the increase in the inner pressure; the top plate 3 and the frame 4 are decoupled as the inner pressure increases and exceeds the maximum allowable pressure limit despite the inversion of the reverse disk 31R, thereby opening the upper portion of the battery module 1 for venting; and the top plate 3 and the frame 4 are re-coupled by the spring member 32 as the inner pressure decreases to be lower than the maximum allowable pressure limit by venting, thereby re-sealing the battery module 1.

### [FOURTH EMBODIMENT]

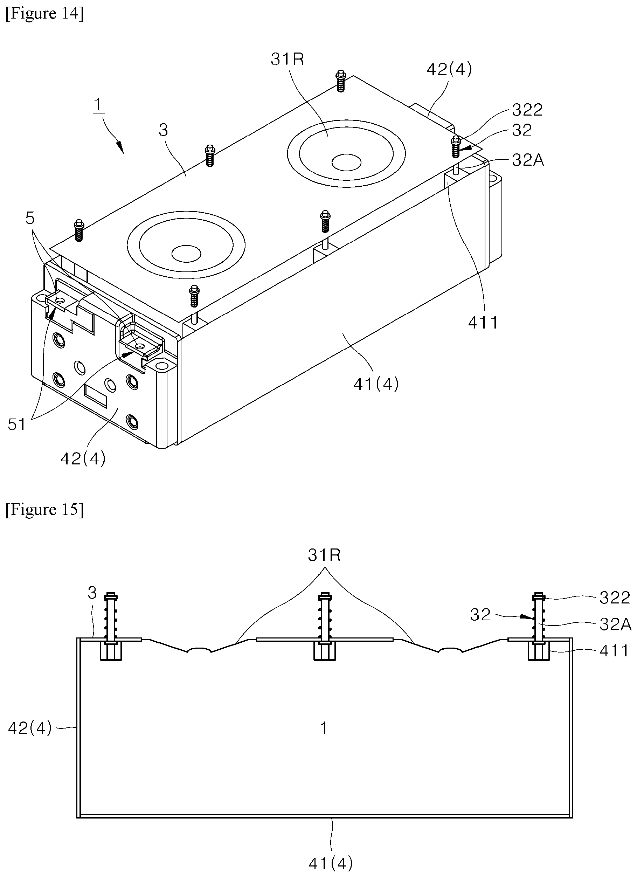

FIG. 14 is a perspective view illustrating a battery module provided with a reverse plate, a spring member and a spring shaft according to a fourth embodiment of the present invention. Referring to FIG. 14, instead of the spring member 32, a spring shaft 32A may be installed embedded in the upper end of the sidewall of the frame. In this case, the embedded installation may be also accomplished through insert injection, or may be accomplished by providing and assembling a separate member for fixation.

When the thickness of the sidewall of the frame 4 is sufficient, the spring shaft 32A may be installed directly embedded in the upper end of the sidewall, and when the thickness of the sidewall of the frame 4 is insufficient, the spring shaft 32A may be installed embedded in a spring installation portion 411 protruding inward from the upper end of the sidewall.

The spring shaft 32A may be provided to penetrate the top plate 3 vertically.

A fixing end 322 capable of fixing the spring member 32 by having a radius larger than the spring member 32 may be provided at the upper end of the spring shaft 32A.

The spring member 32 may be installed to be penetrated by the spring shaft 32A between the top plate 3 and the fixing end 322. That is, the spring member 32 may be installed in a manner that the upper end thereof is in contact with the fixing end 322, and the lower end thereof is in contact with the top plate 3 to be vertically interposed between the fixing end 322 and the top plate 3.

As described above, by providing the spring member 32 between the fixing end 322 at the upper end of the spring shaft 32A and the top plate 3 penetrated by the spring shaft 32A connected to the upper end of the sidewall of the frame 4 and penetrating the top plate 3, the spring member 32 is compressed when the top plate 3 moves away from the upper end of the sidewall of the frame 4 to have a restoring force that pushes the top plate 3 toward the upper end of the sidewall of the frame.

Compressible packing may be additionally installed at the upper end of the sidewall of the frame 4 such that the sealing between the space between the top plate 3 and the frame 4 is facilitated by the pressure applied by the spring member 32.

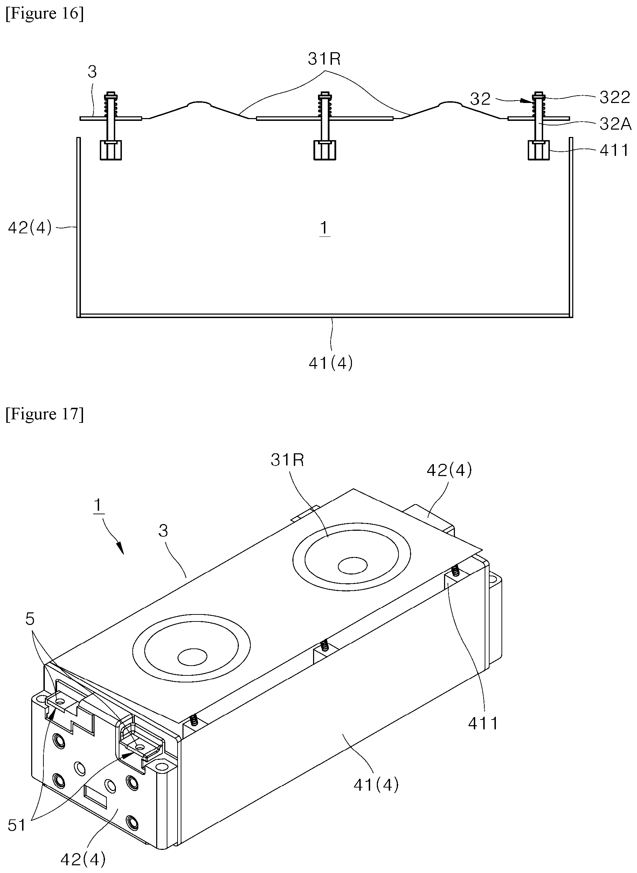

FIGS. 15 and 16 are side cross-sectional views illustrating the battery module provided with the reverse plate, the spring member and the spring shaft before and after ignition, respectively, according to the fourth embodiment of the present invention. Referring to FIGS. 15 and 16, the spring member 32 may include a pre-stressed spring which is pre-tensioned or pre-compressed to have a predetermined restoring force even with the top plate 3 and the frame 4 in complete contact. Accordingly, the maximum allowable pressure limit may be defined as a minimum value of the inner pressure whereat additional tension or compression occurs in the spring member 32.

Alternatively, the top plate 3 and the frame 4 may be connected and coupled to each other by additional fixing member other than the spring member 32. Here, the fixing member may be designed to be destroyed against a load exceeding a predetermined level. Accordingly, the maximum allowable pressure limit may be defined as a minimum value of the inner pressure of the battery module 1 whereat the fixing member is destroyed.

The maximum allowable pressure limit may be set to be lower than the explosion pressure. Thus, the inner pressure of the battery module 1 may reach the maximum allowable pressure limit before reaching the explosion pressure in case of ignition of the battery module 1 such that the top plate 3 is decoupled from the frame 4 and an opening is created in an upward direction for the battery module 1. As a result, flame, heat energy and venting gas generated from the battery cell laminate are vented in the upward direction, thereby reducing the inner pressure of the battery module 1.

In the battery module 1 according to this embodiment, when the inner pressure of the battery module 1 increases due to heat energy, flame and venting gas generated by ignition of the battery cell laminate,: the reverse disk 31R is inverted under the inner pressure higher than the yield pressure of the reverse disk 31R to expand the inner space of the battery module 1, thereby decreasing the inner pressure or delaying the increase in the inner pressure; the top plate 3 and the frame 4 are decoupled as the inner pressure increases and exceeds the maximum allowable pressure limit despite the inversion of the reverse disk 31R, thereby opening the upper portion of the battery module 1 for venting; and the top plate 3 and the frame 4 are re-coupled by the spring member 32 as the inner pressure decreases to be lower than the maximum allowable pressure limit by venting, thereby re-sealing the battery module 1.

### [FIFTH EMBODIMENT]

FIG. 17 is a perspective view illustrating a battery module provided with a reverse plate, a spring member and a hinge according to a fifth embodiment of the present invention. Referring to FIG. 17, one edge of the top plate 3 and one edge of the upper end of the sidewall of the frame 4 may be connected to each other by a hinge 412. Accordingly, the top plate 3 may be rotatably opened and closed about the hinge 412 between the other edge of the top plate 3 and the other edge of the upper end of the sidewall of the frame 4. As a result, the stability of the opening and closing operation of the top plate 3 may be improved, and heat energy, flame and venting gas generated in case of ignition of the battery module 1 may be directed in upward directions and then in horizontal direction with respect to the battery module 1.

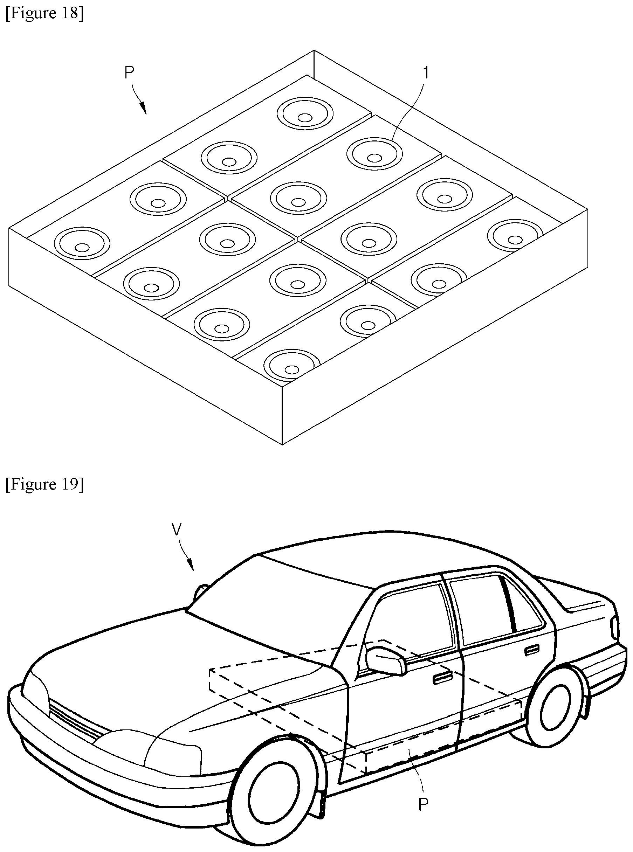

FIGS. 18 and 19 are perspective views illustrating a battery pack including a battery module and a vehicle including the battery pack, respectively, according to the present invention. Referring to FIGS. 18 and 19, a plurality of battery modules 1 according to the present invention may be connected to one another in series or parallel to manufacture a battery pack P with increased voltage or charge and discharge capacity, and this battery pack P may be included in the vehicle V and used as a power source. Since these manufacturing methods for the battery pack P and vehicle V are already known to those skilled in the art, detailed descriptions thereof are omitted herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The embodiments are described above with reference to a number of illustrative embodiments thereof. However, embodiments are not limited to the embodiments and drawings set forth herein, and numerous other modifications and embodiments may be drawn by one skilled in the art within the technical scope of the disclosure. Further, the effects and predictable effects based on the configurations in the disclosure are to be included within the scope of the disclosure though not explicitly described in the description of the embodiments.

## Claims

1. A battery module comprising a battery cell laminate, the battery module comprising:
a frame with an open upper portion;
a top plate coupled to the frame and covering the open upper portion;
a spring member applying pressure in downward direction and fixing the top plate to be in contact with an upper end of the sidewall of the frame; and
an expansion member provided at a portion of the top plate,
wherein the expansion member is cable of expanding outward as an inner pressure of the battery module to increase an inner space of the battery module.

2. The battery module of claim 1, wherein the expansion member comprises an elastic diaphragm expanding outward as the inner pressure of the battery module increases.

3. The battery module of claim 2, wherein a maximum allowable pressure limit defined as a maximum value of the inner pressure of the battery module whereat a bond between the top plate and the frame is maintained is smaller than an explosion pressure defined as a minimum value of the inner pressure whereat the battery module explodes.

4. The battery module of claim 3, wherein the spring member comprises a pre-stressed spring which is pre-tensioned or pre-compressed to have a predetermined restoring force, and
the maximum allowable pressure limit is defined as a minimum value of the inner pressure whereat additional tension or compression occurs in the spring member.

5. The battery module of claim 3, wherein the top plate and the frame are connected and coupled to each other by additional fixing member other than the spring member,
the fixing member is designed to be destroyed against a load exceeding a predetermined level, and
the maximum allowable pressure limit is defined as a minimum value of the inner pressure of the battery module whereat the fixing member is destroyed.

6. The battery module of claim 1, wherein the expansion member yields and protrudes outward when the inner pressure of the battery module is greater than a yield pressure.

7. The battery module of claim 2, wherein a maximum allowable pressure limit defined as a maximum value of the inner pressure of the battery module whereat a bond between the top plate and the frame is maintained is greater than a yield pressure and smaller than an explosion pressure defined as a minimum value of the inner pressure whereat the battery module explodes.

8. The battery module of claim 7, wherein the spring member comprises a pre-stressed spring which is pre-tensioned or pre-compressed to have a predetermined restoring force, and
the maximum allowable pressure limit is defined as a minimum value of the inner pressure whereat additional tension or compression occurs in the spring member.

9. The battery module of claim 7, wherein the top plate and the frame are connected and coupled to each other by additional fixing member other than the spring member,
the fixing member is designed to be destroyed against a load exceeding a predetermined level, and
the maximum allowable pressure limit is defined as a minimum value of the inner pressure of the battery module whereat the fixing member is destroyed.

10. The battery module of any one of claims 1 to 9, wherein the spring member is installed embedded in the upper end of the sidewall of the frame to fix the top plate by applying tension pressure toward the upper end of the sidewall of the frame.

11. The battery module of any one of claims 1 to 9, further comprising a spring shaft extending in an upward direction from the sidewall of the frame through the top plate, wherein
the spring shaft is provided with a spring fixing end at the upper end thereof for fixing the spring member, and
the spring member is installed between the spring fixing end and the top plate to fix the top plate by applying compression pressure toward the upper end of the sidewall of the frame

12. The battery module of claim 10, wherein one edge of the top plate and one edge of the upper end of the sidewall of the frame are connected to each other by a hinge to be capable of providing an opening between other edge of the top plate and other edge of the upper end of the sidewall of the frame.

13. The battery module of claim 11, wherein one edge of the top plate and one edge of the upper end of the sidewall of the frame are connected to each other by a hinge to be able to provide an opening other edge of the top plate and other edge of the upper end of the sidewall of the frame.

14. A battery pack comprising a battery module of any one of claims 1 to 9.

15. A vehicle comprising a battery pack of claim 14.
